# EUROPÄISCHE PATENTSCHRIFT

(11) **EP 2 871 627 B1**
(45) Veröffentlichungstag und Bekanntmachung des Hinweises auf die Patenterteilung: **26.10.2016**
(21) Anmeldenummer: 13192426.8
(22) Anmeldetag: 12.11.2013
(51) Int. Cl.: G08G 1/056, G08G 1/0962, G08G 1/01, G08G 1/065, G08G 1/0967, G01C 21/26, G08G 1/16

(54) **Verfahren und Onboard-Unit zur Warnung bei Falschfahren**
Method and onboard unit for warning against wrong-way driving
Procédé et unité embarquée pour l'avertissement en cas de conduite à contresens

(43) Veröffentlichungstag der Anmeldung: 13.05.2015
(73) Patentinhaber: Kapsch TrafficCom AG, 1120 Wien (AT)
(72) Erfinder: Nagy, Oliver, 1190 Wien (AT)
(74) Vertreter: Weiser, Andreas

(56) Entgegenhaltungen:
- DE-A1-102008 059 278
- DE-U1-202013 005 510
- FR-A1- 2 797 982
- FR-A1- 2 879 000
- FR-A1- 2 972 283
- "Intelligent Transport Systems (ITS); Vehicular Communications; Basic Set of Applications; Definitions", TECHNICAL REPORT, EUROPEAN TELECOMMUNICATIONS STANDARDS INSTITUTE (ETSI), 650, ROUTE DES LUCIOLES ; F-06921 SOPHIA-ANTIPOLIS ; FRANCE, Nr. V1.1.1, 1. Juni 2009 (2009-06-01), XP014044423,

## Beschreibung

Die vorliegende Erfindung betrifft ein Verfahren zur Warnung bei Falschfahren eines Fahrzeugs auf einer Richtungsfahrbahn mit Hilfe einer vom Fahrzeug mitgeführten Onboard-Unit, welche satellitengestützt ihre Position und Bewegungsrichtung ermittelt, letztere mit einer in einer digitalen Straßenkarte für diese Position gespeicherten Soll-Bewegungsrichtung vergleicht und bei Detektion eines Falschfahrens eine Warnmeldung ausgibt. Die Erfindung betrifft ferner eine Onboard-Unit für ein solches Verfahren.

Auf Richtungsfahrbahnen, z.B. Autobahnen, Fern- oder Schnellstraßen, kommt es infolge von Falschfahren zu schweren Unfällen, da falschfahrende Fahrzeuge aufgrund der hohen Geschwindigkeitsdifferenzen, häufig nicht ausreichender Sichtweiten und/oder mangelnder Aufmerksamkeit und Vorbereitung anderer Verkehrsteilnehmer von diesen nicht rechtzeitig wahrgenommen werden. Zur Vorbeugung von derartigen Unfällen wurden bisher einerseits Infrastrukturmaßnahmen gesetzt, welche ein irrtümliches Auffahren eines Fahrzeugs entgegen der Richtungsfahrbahn verhindern sollen, z.B. bauliche Trennung der Auf- von der Abfahrt, besondere Markierungen oder Warnschilder, oder bei Detektion eines falschfahrenden Fahrzeugs Warnmeldungen z.B. über Hörfunk ausgegeben. Diese Maßnahmen sind jedoch lückenhaft, da sie nicht alle Verkehrsteilnehmer erreichen.

Heutige satellitengestützte Systeme zur Positionserfassung (Global Navigation Satellite Systems, GNSS) verfügen über ausreichend hohe Genauigkeit zur fahrspurgenauen Positionserfassung und können ferner die Bewegungsrichtung ermitteln. Im Vergleich mit einer ebenfalls fahrspurgenauen digitalen Straßenkarte, welche für jede Fahrspur bzw. Position auf der Richtungsfahrbahn eine Soll-Bewegungsrichtung gespeichert hat, ist somit eine automatische Detektion und in der Folge auch eine automatische Warnung bei Falschfahren eines Fahrzeugs möglich, wie dies z.B. in der Schrift WO 2012/120224 A1 beschrieben wird.

Bei der hohen Durchdringung eines Fahrzeugbestands mit Onboard-Navigationssystemen oder Straßenmaut-Onboard-Units mit satellitengestützter Positionsbestimmung und einer Ausgabeeinheit z.B. für Warnmeldungen ist ein breiter Einsatz eines solchen Warnsystems bei Falschfahren möglich. Allerdings wird die Nutzbarkeit des Warnsystems eingeschränkt durch mangelnde Aktualität des in den Onboard-Units verwendeten Kartenmaterials und den hohen Aufwand bei der Verteilung - insbesondere der flächendeckenden Verteilung - von aktualisierten Karten; so ist es unflexibel gegenüber Veränderungen, was in Fehlern in der Detektion und unzutreffenden Warnmeldungen resultiert.

Die Erfindung setzt sich zum Ziel, ein Verfahren und eine Onboard-Unit zu schaffen, welche im Einsatz flexibler sind und dabei fehlerhafte Warnmeldungen vermeiden.

Gemäß einem ersten Aspekt der Erfindung wird das Ziel mit einem Verfahren der eingangs genannten Art erreicht, welches umfasst:
bei einer vorübergehenden Verlaufsänderung eines Abschnitts der Richtungsfahrbahn, Vorsehen einer dem genannten Abschnitt vorgeordneten Funkbake mit einem lokalen Funkabdeckungsbereich;
wenn die Onboard-Unit in den Funkabdeckungsbereich der Funkbake eintritt, Empfangen einer von der Funkbake gesendeten Nachricht betreffend die Verlaufsänderung in einem Sendeempfänger der Onboard-Unit; und
Detektieren des Falschfahrens in Abhängigkeit von der empfangenen Nachricht, wobei die Onboard-Unit aufgrund der empfangenen Nachricht das Detektieren des Falschfahrens für eine begrenzte Zeitspanne oder Wegstrecke aussetzt.

Es stellt ein Verdienst der vorliegenden Erfindung dar, erstmals vorübergehende Verlaufsänderungen eines Abschnitts der Richtungsfahrbahn in einem Verfahren zum Warnen bei Falschfahren berücksichtigen zu können. Dadurch wird eine Warnmeldung vom tatsächlichen, aktuellen Verlauf der Richtungsfahrbahn abhängig gemacht und überflüssige Warnmeldungen werden vermieden. Durch den Einsatz einer Funkbake mit einem lokalen Funkabdeckungsbereich ist es ferner möglich, das Warnsystem lokal, z.B. von vor Ort befindlichem Baustellenpersonal, aktivieren zu lassen anstatt von einer entfernten Zentraleinheit aus, wodurch Fehler in der Informationsweitergabe und -verteilung signifikant reduziert werden. Auch eine aufwändige flächendeckende Aktualisierung aller digitalen Straßenkarten in allen Onboard-Units ist somit nicht erforderlich, was den Einsatz des Verfahrens insbesondere in Bezug auf kurzfristige Verlaufsänderungen, z.B. infolge von Unfällen oder Tagesbaustellen, lohnend macht.

Dabei werden fehlerhafte Warnmeldungen in Folge von Befahren der Gegenfahrbahn z.B. in einem Baustellenbereich vorübergehend unterdrückt. Die Funktion des Warnsystems bleibt jedoch in weiterer Folge aufrecht bzw. wird wiederaufgenommen. Dies ist wegen der raschen, flexiblen Einsetzbarkeit in Verbindung mit einem geringen Adaptionsaufwand besonders günstig bei zeitlich und/oder örtlich eng begrenzten Verlaufsänderungen einsetzbar.

Im einfachsten Fall kann die Zeitspanne oder Wegstrecke dabei fest vorgegeben sein, bevorzugt jedoch ist die Zeitspanne oder Wegstrecke in der empfangenen Nachricht angegeben. Dadurch genügt auch bei einer Verlaufsänderung eines längeren Abschnitts der Richtungsfahrbahn eine einzelne Funkbake zur Benachrichtigung und ein überlanges Aussetzen des Detektierens bzw. das Übertragen eines unnötig großen lokalen Ausschnitts der digitalen Straßenkarte in der Nachricht können vermieden werden.

Alternativ dazu ist es möglich, dass die Zeitspanne oder Wegstrecke durch Empfangen einer weiteren Nachricht begrenzt wird, die von einer dem genannten Abschnitt nachgeordneten weiteren Funkbake mit lokalem Funkabdeckungsbereich empfangen wird. Dies führt zu einer einfachen Struktur der von der vorgeordneten Funkbake in der Onboard-Unit empfangenen Nachricht, was einen Einsatz von kleinen, beweglichen Funkbaken erleichtert, welche z.B. in Baustellen- oder Einsatzfahrzeuge oder sogar Verkehrszeichen integriert sein können.

Da heutige Onboard-Units häufig fähig sind, mit anderen Onboard-Units oder Funkbaken ein Ad-hoc-Netzwerk zu bilden, z.B. gemäß den Standards IEEE 802.11p, ITS-G5 oder WAVE, ist es vorteilhaft, wenn die Onboard-Unit die Warnmeldung ferner an Onboard-Units anderer Fahrzeuge und/oder an Funkbaken übermittelt, mit welchen die Onboard-Unit in Kurzreichweiten-Funkverbindung steht. So werden die Warnmeldung bei Falschfahren rasch von Fahrzeug zu Fahrzeug bzw. zu Funkbake weitergegeben und andere Fahrzeuge rechtzeitig gewarnt.

Über eine solche Kurzreichweiten-Funkverbindung erhält eine Onboard-Unit gemäß einer weiteren bevorzugten Ausführungsform der Erfindung von einer anderen Onboard-Unit zumindest eine Information über deren Position und Bewegungsrichtung, um ein Falschfahren eines die andere Onboard-Unit mitführenden Fahrzeugs in der genannten Art und Weise zu detektieren, wobei das Detektieren dieses Falschfahrens ebenfalls in Abhängigkeit von der empfangenen Nachricht erfolgt. Somit ist das erfindungsgemäße Verfahren nicht nur zur Detektion des Falschfahrens jenes Fahrzeugs nutzbar, welches die das Verfahren ausführende Onboard-Unit mitführt, sondern auch für andere Fahrzeuge, deren Onboard-Units zwar ihre Position und gegebenenfalls auch Bewegungsrichtung selbst bestimmen und z.B. im Rahmen einer Common Awareness Message (CAM) gemäß ITS-G5- bzw. WAVE-Standard im Ad-hoc-Netzwerk austauschen, jedoch nicht selbst das erfindungsgemäße Verfahren ausführen. Bereits bei einer geringen Durchdringung der Verkehrsteilnehmer mit das erfindungsgemäße Verfahren ausführenden Onboard-Units ist somit eine annähernd flächendeckende Warnung bei Falschfahren eines Fahrzeugs möglich.

Gemäß einem zweiten Aspekt schafft die Erfindung eine Onboard-Unit für ein Fahrzeug zur Warnung bei Falschfahren des Fahrzeugs auf einer Richtungsfahrbahn, umfassend einen Satellitenempfänger zum Ermitteln ihrer Position und Bewegungsrichtung, einen Sendeempfänger zur Kurzreichweiten-Funkkommunikation, einen Kartenspeicher für eine digitale Straßenkarte, eine Detektionseinheit zur Detektion eines Falschfahrens anhand eines Vergleichs der ermittelten Bewegungsrichtung mit einer in der Straßenkarte für die ermittelte Position gespeicherten Soll-Bewegungsrichtung, sowie eine von der Detektionseinheit gesteuerte Ausgabeeinheit für Warnmeldungen, wobei die Onboard-Unit dafür ausgebildet ist, bei Empfang einer von einer Funkbake gesendeten Nachricht im Sendeempfänger betreffend eine vorübergehenden Verlaufsänderung eines Abschnitts der Richtungsfahrbahn das Falschfahren in Abhängigkeit von der empfangenen Nachricht zu detektieren, wobei die Onboard-Unit einen von der Nachricht gesteuerten Ausschalter zum Ausschalten der Detektionseinheit für eine begrenzte Zeitspanne oder Wegstrecke aufgrund der empfangenen Nachricht hat.

Bezüglich der Vorteile und weiterer bevorzugter Ausführungsformen der erfindungsgemäßen Onboard-Unit wird auf die vorangegangen Ausführung zum Verfahren verwiesen.

Die Erfindung wird nachfolgend anhand von in den beigeschlossenen Zeichnungen dargestellten Ausführungsbeispielen näher erläutert. In den Zeichnungen zeigen:
die Fig. 1a und 1b Fahrzeuge auf Richtungsfahrbahnen in schematischer Draufsicht, wobei die Richtungsfahrbahnen keine Verlaufsänderung (Fig. 1a) bzw. eine vorübergehende Verlaufsänderung (Fig. 1b) haben; und
Fig. 2 eine Onboard-Unit gemäß der Erfindung als Blockdiagramm.

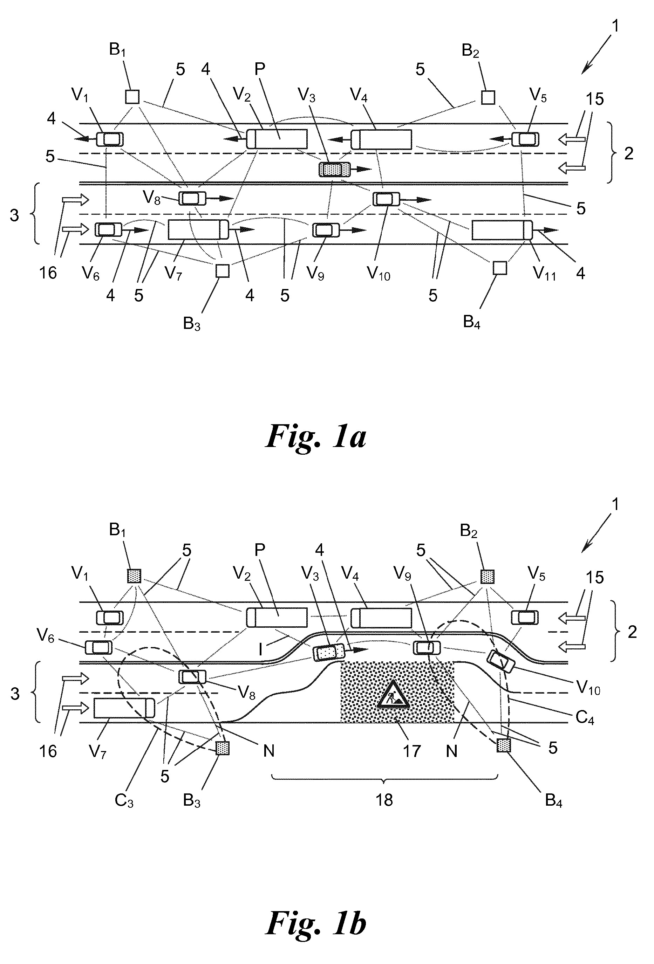

Gemäß Fig. 1a befahren mehrere Fahrzeuge V₁, V₂, ..., allgemein Vᵢ, eine Straße 1 mit zwei Richtungsfahrbahnen 2, 3 jeweils mit einer Geschwindigkeit in einer Bewegungsrichtung 4. Die Richtungsfahrbahnen 2, 3 haben jeweils einen oder mehrere - im Beispiel von Fig. 1a je zwei - Fahrstreifen. Jedes der Fahrzeuge Vᵢ steht mit einem oder mehreren anderen Fahrzeugen Vᵢ und/oder mit stationären, z.B. seitlich oder oberhalb der Richtungsfahrbahnen 2, 3 angebrachten Funkbaken B₁, B₂, ..., allgemein Bᵢ, in Kurzreichweiten-Funkverbindung 5, z.B. nach den Standards IEEE 802.11p, WAVE (Wireless Access in Vehicular Environments), DSRC (Dedicated Short Range Communication) bzw. ITS-G5. Die Funkbaken Bᵢ können ferner miteinander und/oder mit einer Zentraleinheit (nicht dargestellt) in Verbindung stehen.

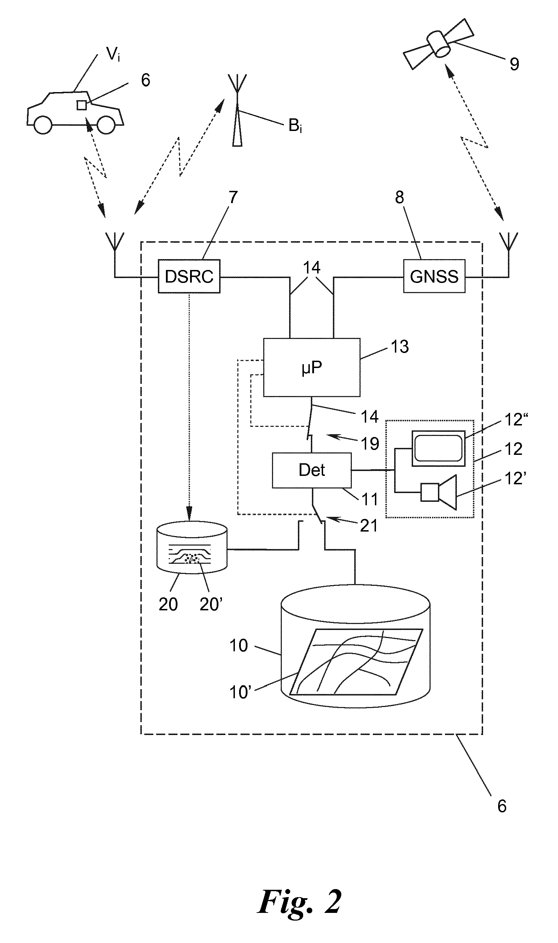

Jedes Fahrzeug Vᵢ führt eine Onboard-Unit 6 gemäß Fig. 2 mit. Neben einem Sendempfänger 7 zur beschriebenen Kurzreichweiten-Funkverbindung 5 mit anderen Fahrzeugen Vᵢ und Funkbaken Bᵢ verfügt die Onboard-Unit 6 über einen Satellitenempfänger 8, welcher mit Hilfe von Satelliten 9 eines globalen Satellitennavigationssystems (Global Navigation Satellite System, GNSS) die Position P und Bewegungsrichtung 4 der Onboard-Unit 6 ermittelt. Zur Erhöhung der Genauigkeit bei der Positionsermittlung können, wenn gewünscht, weitere Sensoren, z.B. Geschwindigkeits- oder Beschleunigungssensoren, und/oder Recheneinheiten zur prädiktiven oder korrektiven Schätzung des Bewegungsverlaufs zusätzlich zum Satellitenempfänger 8 eingesetzt werden.

Die Onboard-Unit 6 umfasst ferner einen Kartenspeicher 10 für eine digitale Straßenkarte 10', eine Detektionseinheit 11 und eine von dieser gesteuerte Ausgabeeinheit 12 für Warnmeldungen. Eine Steuereinheit 13 der Onboard-Unit 6, welche mit dem Sendeempfänger 7, dem Satellitenempfänger 8 und der Detektionseinheit 11 in Datenverbindung 14 steht, steuert die Abläufe der Onboard-Unit 6.

Die Detektionseinheit 11 vergleicht die satellitengestützt ermittelte Bewegungsrichtung 4 der Onboard-Unit 6 mit einer in der digitalen Straßenkarte 10' für eine ebenfalls satellitengestützt ermittelte Position P gespeicherten Soll-Bewegungsrichtung 15, 16 (Fig. 1a) und detektiert an einer vorgegebenen Abweichung der ermittelten Bewegungsrichtung 4 von der Soll-Bewegungsrichtung 15, 16 das Falschfahren der Onboard-Unit 6 und damit des die Onboard-Unit 6 mitführenden Fahrzeugs Vᵢ, worauf die Ausgabeeinheit 12 zur Ausgabe einer Warnmeldung angesteuert wird.

Im dargestellten Beispiel von Fig. 1a detektiert die Onboard-Unit 6 von Fahrzeug V₃, dass ihre ermittelte Position P auf der Richtungsfahrbahn 2 liegt, jedoch ihre ermittelte Bewegungsrichtung 4 der Soll-Bewegungsrichtung 15 der Richtungsfahrbahn 2 entgegenläuft und somit das Fahrzeug V₃ falschfährt. Die Ausgabeeinheit 12 der Onboard-Unit 6 des Fahrzeugs V₃ wird deshalb vom Detektor 11 zur Ausgabe einer Warnmeldung in Folge der Detektion des Falschfahrens angesteuert.

Die Warnmeldung könnte akustisch über einen Lautsprecher 12' und/oder optisch über eine Anzeige 12" erfolgen; es versteht sich, dass dazu optional auch in einem Fahrzeug Vᵢ vorhandene Lautsprecher oder Anzeigen herangezogen werden können und die Onboard-Unit 6 dazu mit diesen Einbauelementen des Fahrzeugs Vᵢ verbunden sein kann. Ferner könnte die Onboard-Unit 6 selbst durch Vernetzung von dazu notwendigen, in einem Fahrzeug Vᵢ bereits vorhandenen Modulen als modularisierte ("virtuelle") Onboard-Unit aufgebaut sein. Die Verbindung bzw. Vernetzung der Module kann dabei drahtgebunden, z.B. mittels FlexRay^{™} oder CAN-Bus (Controler Area Network), oder drahtlos, z.B. mittels Bluetooth oder WLAN, erfolgen. Alternativ kann die Onboard-Unit 6 ein vom Fahrzeug Vᵢ mitgeführtes Satellitennavigationsgerät, eine Straßenmaut-Onboard-Unit 6 oder eine Onboard-Unit 6 für ein allgemeines Verkehrstelematiksystem sein, die jeweils einen Sendeempfänger 7 für die Kurzreichweiten-Funkverbindung hat.

Mithilfe des Sendeempfängers 7 kann die Onboard-Unit 6 des Fahrzeugs V₃ im Beispiel von Fig. 1a die Warnmeldung ferner an Onboard-Units 6 anderer Fahrzeuge Vᵢ - hier der Fahrzeuge V₂, V₄, V₉ und V₁₀ - und/oder an Funkbaken Bᵢ übermitteln, mit welchen die Onboard-Unit 6 in Kurzreichweiten-Funkverbindung 5 steht. Wenn gewünscht, können darauf die im Beispiel von Fig. 1a mit dem Fahrzeug V₃ in Kurzreichweiten-Funkverbindung 5 stehenden Fahrzeuge V₂, V₄, V₉, V₁₀ die genannte Warnmeldung an weitere Fahrzeuge Vᵢ und Funkbaken Bᵢ weiterleiten, mit welchen sie jeweils selbst in Kurzreichweiten-Funkverbindung 5 stehen. Dadurch werden neben dem falschfahrenden Fahrzeug V₃ selbst auch andere, insbesondere entgegenkommende, Fahrzeuge Vᵢ rechtzeitig vor dem falschfahrenden Fahrzeug V₃ gewarnt.

Im Beispiel von Fig. 1b kommt es infolge einer Baustelle 17 zu einer vorübergehenden Verlaufsänderung eines Abschnitts 18 der Richtungsfahrbahn 3, sodass die Richtungsfahrbahn 3 in diesem Abschnitt auf der entgegengesetzten Richtungsfahrbahn 2 zu liegen kommt. Da diese Verlaufsänderung 18 nur vorübergehend ist, z.B. eine unfallbedingte Maßnahme, Tagesbaustelle oder eine andere vorübergehende Maßnahme, werden keine neuen digitalen Straßenkarten in die Kartenspeicher 10 aller Onboard-Units 6 aller Verkehrsteilnehmer eingespeichert.

Infolge der Verlaufsänderung 18 werden die die Richtungsfahrbahn 3 benutzenden Fahrzeuge Vᵢ auf die entgegengesetzte Richtungsfahrbahn 2 umgeleitet. So befährt im Beispiel von Fig. 1b das Fahrzeug V₃ gerade die Richtungsfahrbahn 2 entgegen der in der digitalen Straßenkarte 10' des Kartenspeichers 10 für die Position P des Fahrzeugs V₃ - bzw. für die Richtungsfahrbahn 2 - gespeicherten Soll-Bewegungsrichtung 15, ohne dabei jedoch falsch zu fahren. Um in diesem Fall fehlerhafte Falschfahr-Warnmeldungen zu vermeiden, wird nun eine dem genannten Abschnitt 18 vorgeordnete Funkbake B₃ mit einem lokalen Funkabdeckungsbereich C₃ vorgesehen.

Die Funkbake B₃ sendet an Onboard-Units 6, welche in den Funkabdeckungsbereich C₃ der Funkbake B₃ eintreten, über eine Kurzreichweiten-Funkverbindung 5 eine vorbereite Nachricht N betreffend die Verlaufsänderung 18, welche im Sendeempfänger 7 der Onboard-Unit 6 empfangen wird, worauf die Onboard-Unit 6 das Falschfahren in Abhängigkeit von bzw. unter Berücksichtigung der empfangenen Nachricht N detektiert.

Der lokale Funkabdeckungsbereich Cᵢ einer Funkbake Bᵢ - hier der Funkabdeckungsbereich C₃ der Funkbake B₃ - kann dabei z.B. mit Hilfe einer entsprechend ausgerichteten Antenne mit Richtcharakteristik auf die Richtungsfahrbahn 3 beschränkt oder sogar fahrstreifenbegrenzt sein, wobei die Funkbake Bᵢ z.B. neben der Straße 1 oder auf einer diese querenden Brücke (nicht gezeigt) angeordnet sein kann. Alternativ kann die Funkbake Bᵢ eine Antenne mit Rundstrahlcharakteristik haben, wodurch ein Ausrichten auf eine Richtungsfahrbahn 2, 3 oder einen Fahrstreifen entfällt.

Die Onboard-Unit 6 setzt das Detektieren des Falschfahrens aufgrund der von der Funkbake B₃ empfangenen Nachricht N für eine begrenzte Zeitspanne oder Wegstrecke aus, wie symbolisch durch einen von der Steuereinheit 13 gesteuerten Ausschalter 19 der Onboard-Unit 6 zum Ausschalten der Detektionseinheit 11 aufgrund der empfangenen Nachricht N dargestellt ist. Dabei kann der Ausschalter 19 softwaremäßig oder wie in Fig. 2 dargestellt als Hardware-Schalter realisiert sein. Als veranschaulichendes Beispiel kann die von der Funkbake B₃ in der Onboard-Unit 6 empfangene Nachricht N einen lokalen Ausschnitt 20' der digitalen Straßenkarte 10' mit der Verlaufsänderung 18 enthalten, wobei die Onboard-Unit 6 zum Detektieren des Falschfahrens die gespeicherte Straßenkarte 10' in dem lokalen Ausschnitt für eine begrenzte Zeitspanne oder Wegstrecke durch den empfangenen Kartenausschnitt 20' ersetzt. In diesem veranschaulichenden Beispiel hat die Onboard-Unit 6 z.B. einen Speicher 20 zum Speichern des in der empfangenen Nachricht N enthaltenen lokalen Ausschnitts 20' mit der Verlaufsänderung 18 und einen von der Steuereinheit 13 gesteuerten (symbolisch dargestellten) Umschalter 21 zum Umschalten vom Kartenspeicher 10 auf den Speicher 20 infolge der empfangenen Nachricht N. Es versteht sich, dass auch der Umschalter 21 als Hardware- oder Softwareschalter realisiert sein kann und ferner Kartenspeicher 10 und Speicher 20 in ein und demselben physischen Speicherelement liegen können.

Die genannte begrenzte Zeitspanne oder Wegstrecke kann einerseits in der Onboard-Unit 6 fix vorgegeben sein, wobei im Falle eines längeren Abschnitts 18 mit Verlaufsänderung gegebenenfalls auch mehrere aufeinanderfolgende Funkbaken Bᵢ zum Senden jeweils einer weiteren Nachricht N betreffend die Verlaufsänderung vorgesehen werden können, oder in der von der Funkbake B₃ empfangenen Nachricht N selbst angegeben sein. Alternativ ist es auch möglich, dass die Zeitspanne oder Wegstrecke durch Empfangen einer weiteren Nachricht N begrenzt wird, die von einer dem genannten Abschnitt 18 nachgeordneten weiteren Funkbake Bᵢ - im Beispiel von Fig. 1b der Funkbake B₄ - mit einem lokalen Funkabdeckungsbereich C₄ empfangen wird. In dieser Ausführungsform schaltet die Funkbake B₃ gleichsam die Detektionseinheit 11 aus bzw. vom Kartenspeicher 10 auf den Speicher 20 um, wogegen die Funkbake B₄ die Detektionseinheit 11 wieder einschaltet bzw. vom Speicher 20 wieder zurück auf den Kartenspeicher 10 schaltet.

Die Funkbaken Bᵢ können beispielsweise auch in Straßenschilder, z.B. Baustellen-Warnschilder, oder Bau- bzw. Einsatzfahrzeuge integriert sein; es ist aber ebenso möglich, lediglich bereits bestehende Funkbaken Bᵢ zum Senden der genannten Nachricht zu nutzen, z.B. Funkbaken Bᵢ an Auf- bzw. Abfahrten oder anderswo im Verlauf der Richtungsfahrbahnen 2, 3.

Ferner ist es möglich, das beschriebene Verfahren für eine Onboard-Unit 6 zu nutzen, die von einer anderen Onboard-Unit 6 über die Kurzreichweiten-Funkverbindung 5 zumindest eine Information I über deren Position P und Bewegungsrichtung 4 erhält, um ein Falschfahren eines die andere Onboard-Unit 6 mitführenden Fahrzeugs Vᵢ in der genannten Art und Weise zu detektieren; dabei wird ein Falschfahren des genannten anderen Fahrzeugs Vᵢ in der hier erstgenannten ("einen") Onboard-Unit 6 wie beschrieben ebenfalls in Abhängigkeit von der von einer Funkbake Bᵢ empfangenen Nachricht detektiert.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Verfahren zur Warnung bei Falschfahren eines Fahrzeugs (Vᵢ) auf einer Richtungsfahrbahn (2, 3) mit Hilfe einer vom Fahrzeug (Vᵢ) mitgeführten Onboard-Unit (6), welche satellitengestützt ihre Position (P) und Bewegungsrichtung (4) ermittelt, letztere mit einer in einer digitalen Straßenkarte (10') für diese Position (P) gespeicherten Soll-Bewegungsrichtung (15, 16) vergleicht und bei Detektion eines Falschfahrens eine Warnmeldung ausgibt, **gekennzeichnet durch** die Schritte :
bei einer vorübergehenden Verlaufsänderung eines Abschnitts (18) der Richtungsfahrbahn (2, 3), Vorsehen einer dem genannten Abschnitt (18) vorgeordneten Funkbake (B₃) mit einem lokalen Funkabdeckungsbereich (C₃);
wenn die Onboard-Unit (6) in den Funkabdeckungsbereich (C₃) der Funkbake (B₃) eintritt, Empfangen einer von der Funkbake (B₃) gesendeten Nachricht (N) betreffend die Verlaufsänderung in einem Sendeempfänger (7) der Onboard-Unit (6); und
Detektieren des Falschfahrens in Abhängigkeit von der empfangenen Nachricht (N), wobei die Onboard-Unit (6) aufgrund der empfangenen Nachricht (N) das Detektieren des Falschfahrens für eine begrenzte Zeitspanne oder Wegstrecke aussetzt.

2. Verfahren nach Anspruch 1, **dadurch gekennzeichnet, dass** die Zeitspanne oder Wegstrecke in der empfangenen Nachricht (N) angegeben ist.

3. Verfahren nach Anspruch 1, **dadurch gekennzeichnet, dass** die Zeitspanne oder Wegstrecke durch Empfangen einer weitere Nachricht (N) begrenzt wird, die von einer dem genannten Abschnitt (18) nachgeordneten weiteren Funkbake (B₄) mit lokalem Funkabdeckungsbereich (C₄) empfangen wird.

4. Verfahren nach einem der Ansprüche 1 bis 3, **dadurch gekennzeichnet, dass** die Onboard-Unit (6) die Warnmeldung ferner an Onboard-Units (6) anderer Fahrzeuge (Vᵢ) und/oder an Funkbaken (Bᵢ) übermittelt, mit welchen die Onboard-Unit (6) in Kurzreichweiten-Funkverbindung (5) steht.

5. Verfahren nach einem der Ansprüche 1 bis 4 für eine Onboard-Unit (6), die von einer anderen Onboard-Unit (6) zumindest eine Information (I) über deren Position (P) und Bewegungsrichtung (4) erhält, um ein Falschfahren eines die andere Onboard-Unit (6) mitführenden Fahrzeugs (Vᵢ) in der genannten Art und Weise zu detektieren, **dadurch gekennzeichnet, dass** das Detektieren dieses Falschfahrens ebenfalls in Abhängigkeit von der empfangenen Nachricht (N) erfolgt.

6. Onboard-Unit für ein Fahrzeug (Vᵢ) zur Warnung bei Falschfahren des Fahrzeugs (Vᵢ) auf einer Richtungsfahrbahn (2, 3), umfassend einen Satellitenempfänger (8) zum Ermitteln ihrer Position (P) und Bewegungsrichtung (4), einen Sendeempfänger (7) zur Kurzreichweiten-Funkkommunikation (5), einen Kartenspeicher (10) für eine digitale Straßenkarte, eine Detektionseinheit (11) zur Detektion eines Falschfahrens anhand eines Vergleichs der ermittelten Bewegungsrichtung (4) mit einer in der Straßenkarte (10') für die ermittelte Position (P) gespeicherten Soll-Bewegungsrichtung (15, 16), sowie eine von der Detektionseinheit (11) gesteuerte Ausgabeeinheit (12) für Warnmeldungen, **dadurch gekennzeichnet, dass** die Onboard-Unit (6) dafür ausgebildet ist, bei Empfang einer von einer Funkbake (Bᵢ) gesendeten Nachricht (N) im Sendeempfänger (7) betreffend eine vorübergehenden Verlaufsänderung eines Abschnitts (18) der Richtungsfahrbahn (2, 3) das Falschfahren in Abhängigkeit von der empfangenen Nachricht (N) zu detektieren, wobei die Onboard-Unit (6) einen von der Nachricht (N) gesteuerten Ausschalter (19) zum Ausschalten der Detektionseinheit (11) für eine begrenzte Zeitspanne oder Wegstrecken aufgrund der empfangenen Nachricht (N) hat.

## Claims

1. A method for warning in case of wrong-way travel of a vehicle (Vᵢ) on a directional carriageway (2, 3) by means of an on-board unit (6) carried by the vehicle (Vᵢ), said on-board unit determining its position (P) and direction of movement (4) in a satellite-assisted manner, comparing the latter with a target direction of movement (15, 16) stored in a digital road map (10') for this position (P) and outputting a warning message when detecting a wrong-way travel, **characterized by** the steps:
for a temporary change in course of a section (18) of the directional carriageway (2, 3), providing a radio beacon (B₃) arranged upstream of said section (18) and having a local radio coverage range (C₃);
when the on-board unit (6) enters the radio coverage range (C₃) of the radio beacon (B₃), receiving a message (N) sent by the radio beacon (B₃) concerning the change in course in a transceiver (7) of the on-board unit (6); and
detecting the wrong-way travel depending on the received message (N), wherein the on-board unit (6) suspends the detection of the wrong-way travel for a limited period of time or stretch of road on account of the received message (N).

2. The method according to Claim 1, **characterised in that** the period of time or stretch of road is specified in the received message (N).

3. The method according to Claim 1, **characterised in that** the period of time or stretch of road is limited by the receipt of a further message (N), which is received from a further radio beacon (B₄) arranged downstream of the specified section (18) and having a local radio coverage range (C₄).

4. The method according to any one of Claims 1 to 3, **characterised in that** the on-board unit (6) also transmits the warning message to on-board units (6) of other vehicles (Vᵢ) and/or to radio beacons (Bᵢ) with which the on-board unit (6) is in short-range radio communication (5).

5. The method according to any one of Claims 1 to 4 for an on-board unit (6) which receives, from another on-board unit (6), at least one information item (I) concerning the position (P) and direction of movement (4) thereof so as to detect, in the specified manner, a wrong-way travel of a vehicle (Vᵢ) carrying the other on-board unit (6), **characterised in that** the detection of this wrong-way travel is also carried out depending on the received message .

6. An on-board unit for a vehicle (Vᵢ) for warning in case of wrong-way travel of the vehicle (Vᵢ) on a directional carriageway (2, 3), comprising a satellite receiver (8) for determining its position (P) and direction of movement (4), a transceiver (7) for short-range radio communication (5), a map memory (10) for a digital road map, a detection unit (11) for detecting wrong-way travel by means of a comparison of the determined direction of movement (4) with a target direction of movement (15, 16) stored in the road map (10') for the determined position (P), as well an output unit (12) for warning messages controlled by the detection unit (11), **characterised in that** the on-board unit (6) is configured to, upon receipt in the transceiver (7) of a message (N) sent by a radio beacon (Bᵢ) concerning a temporary change in course of a section (18) of the directional carriageway (2, 3), detect the wrong-way travel depending on the received message (N), wherein the on-board unit (6) has an off-switch (19) controlled by the message (N) for switching off the detection unit (11) for a limited period of time or stretch of road on account of the received message (N).

## Revendications

1. Procédé pour l'avertissement en cas de conduite à contresens pour un véhicule (Vᵢ) sur une voie de circulation à sens unique (2, 3) à l'aide d'une unité embarquée (6) transportée par le véhicule (Vᵢ), laquelle détermine sa position (P) et son sens de déplacement (4) par satellite, compare ce dernier avec un sens de déplacement de consigne (15, 16) mémorisé dans une carte routière (10') numérique pour cette position (P) et, lors d'une détection d'une conduite à contresens, émet un message d'alerte, **caractérisé par** les étapes :
pour une changement temporaire de cours d'une portion (18) de la voie de circulation à sens unique (2, 3), le placement d'une balise radio (B₃) disposée avant ladite portion (18) et ayant une zone de couverture radio (C₃) locale ;
lorsque l'unité embarquée (6) pénètre dans la zone de couverture radio (C₃) de la balise radio (B₃), la réception d'une information (N) envoyée par la balise radio (B₃) concernant le changement de cours dans un émetteur-récepteur (7) de l'unité embarquée (6) ; et
la détection de la conduite à contresens en fonction de l'information (N) reçue, où l'unité embarquée (6) suspend, en raison de l'information (N) reçue, la détection de la conduite à contresens pour un laps de temps limité ou un trajet limité.

2. Procédé selon la revendication 1, **caractérisé en ce que** le laps de temps ou le trajet est indiqué dans l'information (N) reçue.

3. Procédé selon la revendication 1, **caractérisé en ce que** le laps de temps ou le trajet est limité par la réception d'une autre information (N), qui est reçue par une autre balise radio (B₄) disposée après ladite portion (18) avec une zone de couverture radio (C₄) locale.

4. Procédé selon l'une des revendications 1 à 3, **caractérisé en ce que** l'unité embarquée (6) transmet le message d'alerte en outre à des unités embarquées (6) d'autres véhicules (Vi) et/ou à des balises radio (Bᵢ), avec lesquelles l'unité embarquée (6) est en communication radio de courte portée (5).

5. Procédé selon l'une des revendications 1 à 4 pour une unité embarquée (6), qui reçoit au moins une information (I) concernant sa position (P) et son sens de déplacement (4) d'une autre unité embarquée (6), afin de détecter une conduite en contresens de l'un des véhicules (Vᵢ) transportant l'autre unité embarquée (6) dans ladite manière et façon, **caractérisé en ce que** la détection de cette conduite en contresens s'effectue également en fonction de l'information (N) reçue.

6. Unité embarquée pour un véhicule (Vᵢ) pour l'avertissement dans le cas d'une conduite à contresens du véhicule (Vᵢ) sur une voie de circulation à sens unique (2, 3), comprenant un récepteur satellite (8) pour la détermination de sa position (P) et de son sens de déplacement (4), un émetteur-récepteur (7) pour la communication radio de courte portée (5), une mémoire de cartes (10) pour une carte routière numérique, une unité de détection (11) pour la détection d'une conduite à contresens à l'aide d'une comparaison de la direction de déplacement (4) déterminée avec une direction de déplacement de consigne (15, 16) mémorisée dans une carte routière (10') pour la position déterminée (P), ainsi qu'une unité d'émission (12) pour des messages d'alerte commandée par l'unité de détection (11), **caractérisée en ce que** l'unité embarquée (6) est conçue pour, lors de la réception d'une information (N) envoyée par une balise radio (Bᵢ) dans l'émetteur-récepteur (7) concernant un changement temporaire de cours sur une portion (18) de la voie de circulation à sens unique (2, 3), détecter la conduite à contresens en fonction de l'information (N) reçue, où l'unité embarquée (6) a un système de suspension (19) commandé par l'information (N) pour suspendre, en raison de l'information (N) reçue, l'unité de détection (11) pour un laps de temps limité ou un trajet limité.
